# EUROPÄISCHE PATENTSCHRIFT

(11) **EP 3 409 122 B1**
(45) Veröffentlichungstag und Bekanntmachung des Hinweises auf die Patenterteilung: **23.09.2020**
(21) Anmeldenummer: 18166252.9
(22) Anmeldetag: 09.04.2018
(51) Int. Cl.: A21C 3/02

(54) **VORRICHTUNG ZUM LANGROLLEN, STRECKEN UND DEHNEN EINES TEIGSTÜCKS**
DEVICE FOR STRETCH-ROLLING, STRETCHING AND EXTENDING A DOUGH PIECE
DISPOSITIF D'ALLONGEMENT, D'ÉTIRAGE ET D'EXTENSION D'UN MORCEAU DE PÂTE

(30) Priorität: 02.06.2017 DE 102017112195
(43) Veröffentlichungstag der Anmeldung: 05.12.2018
(73) Patentinhaber: Fritsch Bakery Technologies GmbH & Co. KG, 97348 Markt Einersheim (DE)
(72) Erfinder: BERNHARDT, Udo, 97346 Iphofen (DE)
(74) Vertreter: Grünecker Patent- und Rechtsanwälte PartG mbB

(56) Entgegenhaltungen:
- EP-A1- 2 520 170
- DE-A1- 10 139 885
- DE-T2- 68 905 776
- US-A- 2 405 661

## Beschreibung

Die Erfindung betrifft eine Vorrichtung zum Langrollen, Strecken und Dehnen eines Teigstücks nach dem Oberbegriff des Anspruchs 1.

Eine gattungsgemäße Vorrichtung zum Langrollen eines Teigstücks ist beispielsweise aus der DE 101 39 885 A1 bekannt. Mit der dort beschriebenen Vorrichtung werden trapezförmig zugeschnittene Teigstücke ausgewalzt, um die Dicke des Teigstücks zu verringern und die Länge des Teigstücks zu vergrößern. Anschließend werden die Teigstücke in einer Wickelvorrichtung zu Croissants aufgewickelt.

Zum Auswalzen der Teigstücke in der Vorrichtung dient eine Langrollwalze, die zusammen mit einem darunter angeordneten Förderband einen Walzspalt bildet. Die Höhe des Walzspalts ist dabei kleiner als die Dicke des Teigstücks vor dem Auswalzen, so dass das Teigstück beim Durchfördern durch den Walzspalt ausgewalzt wird. Durch das Auswalzen nimmt zum einen die Dicke des Teigstücks ab und es wird zugleich die Länge des Teigstücks vergrößert.

Aus der DE 689 05 776 T2 ist eine Vorrichtung zum Bilden einer Teigrolle bekannt, in der ein Teigstück zwischen zwei gegenüber angeordneten Rollen gestreckt wird, um anschließend aufgerollt zu werden. Um das Teigstück möglichst genau zu strecken und zu rollen, ist stromaufwärts des Rollenpaars eine seitlich haltende Einrichtung angeordnet. Diese haltende Einrichtung verhindert, dass sich ein Teil des Teigstücks verformt, während es zwischen dem Paar von Rollen hindurchgeht und gestreckt wird. Diese haltende Einrichtung kommt auf der Oberseite des Teigstücks zur Anlage und weist eine Mehrzahl von Vorsprüngen auf, die am Teigstück in Eingriff gebracht werden können.

Nachteilig an den bekannten Vorrichtungen zum Langrollen von Teigstücken, wie sie insbesondere bei der Croissantherstellung in Großbäckereien Verwendung finden, ist es, dass kleinere Lageabweichungen der noch ungewalzten Teigstücke durch das Auswalzen mit der Langrollwalze signifikant verstärkt werden. Dies kann dazu führen, dass Lageabweichungen von wenigen Millimetern vor dem Auswalzen zu Lagefehlern von mehreren Zentimetern nach dem Auswalzen führen. Diese Lagefehler der ausgewalzten Teigstücke können den nachfolgenden Produktionsprozess erheblich stören. Sollen beispielsweise die ausgewalzten Teigstücke zu Croissants gewickelt werden, so führen die Lagefehler zu Fehlwicklungen und entsprechenden Ausschussmengen.

Aufgabe der vorliegenden Erfindung ist es deshalb, eine neue Vorrichtung zum Langrollen von Teigstücken vorzuschlagen, mit der die Nachteile des vorbekannten Stands der Technik vermieden werden können und um ein teigschonendes Längen der Teigstücke zu ermöglichen.

Vorteilhafte Ausführungsformen der Erfindung sind Gegenstand der Unteransprüche.

Untersuchungen zur Verstärkung von kleineren Lageabweichungen in signifikante Lagefehler beim Auswalzen von Teigstücken haben gezeigt, dass diese insbesondere darauf beruhen, dass die beim Auswalzen auf den Teig wirkenden Kräfte aufgrund der anfänglichen Lageabweichungen asymmetrisch eingeleitet werden. Durch diese asymmetrische Krafteinleitung wirken Kräfte auf das Teigstück, die zu den unerwünschten Lagefehlern führen. Auch Teigstücke die keine Lageabweichung vor dem Auswalzen haben, können nach dem Auswalzen eine Lageabweichung aufweisen, die zu schief gewickelten Teigstücken führt. Dies kann durch eine asymmetrische Oberflächenbeschaffenheit z. B. klebrig trocken, oder Geometrieabweichungen z.B.: in der Dicke oder andere technologische Einflüsse, z.B. Spannungen im Teig durch das Laminieren (Falten) verursacht sein.

Grundgedanke der erfindungsgemäßen Vorrichtung ist es deshalb, die Teigstücke während des Auswalzens in ihrer Relativlage zu dem von unten anliegenden Förderband zu fixieren, so dass die beim Auswalzen in unerwünschter Weise asymmetrisch eingeleiteten Kräfte abgefangen werden können und nicht zu der unerwünschten Verstärkung von Lagefehlern führen.

Um dies zu erreichen ist die erfindungsgemäße Vorrichtung im Bereich vor der Langrollwalze mit einem umlaufenden Fixierband vorgesehen, das mit der gleichen oder kleineren Umlaufgeschwindigkeit wie das Förderband angetrieben wird und auf der Oberseite des Teigstücks im noch nicht ausgewalzten Bereich zur Anlage kommt. Der Andruck des Fixierbands auf dem Teigstück ist dabei so gering zu wählen, dass das Teigstück insgesamt durch den Andruck des Fixierbands nicht verformt wird. Um die beim Auswalzen auf das Teigstück wirkenden lageverändernden Kräfte abfangen zu können, ist das Fixierband an seiner Oberfläche mit Prägevorsprüngen versehen. Sobald das Fixierband auf der Oberseite des Teigstücks zur Anlage kommt, werden diese Prägevorsprünge formschlüssig in die Oberfläche des Teigstücks eingeprägt und stellen einen Formschluss zwischen Teigstück und Fixierband her. Aufgrund dieses Formschlusses kann sich der noch nicht ausgewalzte Teil des Teigstücks auch bei asymmetrischer Einleitung von Kräften im Bereich der Langrollwalze nicht relativ zu dem mit gleicher Geschwindigkeit umlaufenden Förderband verschieben, so dass unerwünschte Lageveränderungen ausgeschlossen werden. Im Ergebnis kann also durch das Fixierband erreicht werden, dass die vor dem Auswalzen vorhandenen geringfügigen Lageabweichungen nicht in die den Produktionsprozess störenden Lagefehler verstärkt werden.

Abhängig von den Geschwindigkeitsdifferenzen des Fixierbandes, der das Teigstück tragenden Förderbänder und/oder der Langrollwalze kann das Teigstück nicht nur fixiert sondern ggf. zusätzlich auch noch gestreckt bzw. gedehnt werden. Dadurch kann insbesondere auch ein Aufstauen des Teiges vor dem Walzspalt verhindert werden und ein teigschonendes Längen der Teigstücke realisiert werden.

Die gewünschte Längenänderung des Teigstücks wird mit der Vorrichtung nicht nur durch das Abwalzen realisiert, bei dem der Teig horizontal zur Förderrichtung, d.h. üblicherweise in vertikaler Richtung, umgeformt wird. Zusätzlich wird das Teigstück mit der Vorrichtung auch in der Förderrichtung gedehnt bzw. gestreckt, was eine Umformung in Förderrichtung, d.h. üblicherweise in horizontaler Richtung, bedeutet. Um das Teigstück zusätzlich in der Länge zu strecken bzw. zu dehnen, ist es vorgesehen, dass das Förderband, auf dem das Teigstück mit einer Dicke D₁ vor dem Walzspalt in Förderrichtung gefördert wird, und das Fixierband synchron zueinander mit einer ersten Umlaufgeschwindigkeit (V₁) angetrieben werden, und dass das Förderband, auf dem das Teigstück mit einer Dicke D₂ nach dem Walzspalt in Förderrichtung gefördert wird, und die tangentiale Rotationsgeschwindigkeit der Langrollwalze (11) synchron zueinander mit einer zweiten Umlaufgeschwindigkeit (V₂) angetrieben werden, wobei das Geschwindigkeitsverhältnis V₂/V₁ zumindest geringfügig größer ist, als das Dickenverhältnis D₁/D₂. Bei bekannten Vorrichtungen entspricht das Geschwindigkeitsverhältnis V₂/V₁ gerade dem Dickenverhältnis D₁/D₂, so dass die durch das Abwalzen verursachte Längenänderung ausgeglichen wird. Wird das Geschwindigkeitsverhältnis V₂/V₁ zumindest geringfügig größer als das Dickenverhältnis D₁/D₂ gewählt, so wird das Teigstück im Übergangsbereich zwischen dem Fixierband einerseits und dem Walzspalt anderseits in seiner Länge gedehnt bzw. gestreckt. Aufgrund der Fixierung des Teigstücks zwischen dem Förderband und dem Fixierband wird verhindert, dass das Teigstück der Dehnung ausweicht.

Welche äußere Gestalt die Prägevorsprünge aufweisen, ist grundsätzlich beliebig. Um einen ausreichenden Formschluss zwischen der Oberfläche des Teigstücks und dem daran anliegenden Fixierband zu realisieren und zugleich eine Verformung des Teigstücks insgesamt zu vermeiden ist es besonders vorteilhaft, wenn die Prägevorsprünge in der Form von Prägenoppen ausgebildet sind.

Die Prägenoppen sollten dabei bevorzugt eine kugelabschnittsförmige Prägekontur aufweisen. Es sind aber auch kegelförmige oder zylinderförmige Prägekonturen denkbar.

Soweit die Prägenoppen eine zylinderabschnittsförmige Prägekontur aufweisen, sollten die zylinderabschnittsförmigen Prägenoppen bevorzugt mit ihrer Stirnseite in die Oberfläche der Teigstücke formschlüssig eingeprägt werden.

Beim Auswalzen der Teigstücke kann es in unerwünschter Weise dazu kommen, dass der ausgewalzte Teig nach dem Auswalzen an der Langrollwalze anhaftet und dadurch unerwünschte Falten bei der Weiterverarbeitung gebildet werden. Dieses Anhaften des Teigs an der Langrollwalze tritt insbesondere dann auf, wenn der Walzspalt im Vergleich zur Dicke des Teigs relativ eng ist, und eine starke Verringerung der Dicke des Teigstücks erreicht werden soll. Um diesem unerwünschten Anhaften des Teigs an der Walze entgegenzuwirken, kann die tangentiale Rotationsgeschwindigkeit der Langrollwalze, d.h. die Umlaufgeschwindigkeit der Langrollwalze an ihrer Oberfläche, etwas höher als die Umlaufgeschwindigkeit des darunter liegenden Förderbandes gewählt werden. Im Ergebnis wird durch diese Geschwindigkeitsdifferenz zwischen der Umlaufgeschwindigkeit der Langrollwalze an ihrem Außenumfang einerseits und der Fördergeschwindigkeit des darunter liegenden Förderbandes andererseits erreicht, dass zwischen Teig und Langrollwalze ein geringfügiger Schlupf entsteht, der dem Anhaften des Teiges an der Langrollwalze entgegenwirkt.

Um eine unerwünschte Verformung des Teigstücks durch den Andruck des Fixierbands auszuschließen, sollte das Fixierband mit einer vorgegebenen Andruckkraft auf der Oberfläche aufliegen, wobei diese vorgegebene Andruckkraft insbesondere von der Dicke des Teigstücks unabhängig sein sollte. Die Andruckkraft ist dabei so zu wählen, dass der Formschluss zwischen Teigstück und Prägenoppen jederzeit gewährleistet ist.

Um den von der Dicke des Teigstücks unabhängigen Andruck des Fixierbands zu realisieren, kann das Fixierband in einem Gestell umlaufend gelagert werden, wobei das Gestell relativ zum Förderband schwenkbar gelagert ist.

Gemäß einer ersten Ausführungsform ist es vorgesehen, dass das schwenkbar gelagerte Gestell mit einer von einem Federelement aufgebrachten Federkraft gegen die Oberfläche des Teigstücks gedrückt wird.

Alternativ dazu kann das schwenkbar gelagerte Gestell mit einer vorgegebenen Gewichtskraft auf der Oberfläche des Teigstücks aufliegen. Im Ergebnis ändert sich dann die Andruckkraft, mit der das Gestell mit dem daran umlaufenden Fixierband gegen den Teig drückt, nicht, wenn die Dicke des Teigstücks gegenüber dem Sollmaß Abweichungen aufweist.

Zur Änderung der Gewichtskraft können am Gestell Zusatzgewichte angebracht werden.

Vorteilhaft ist es, wenn das Gestell an einem Höhenanschlag zur Anlage kommen kann, um einen Mindestabstand zwischen Fixierband und Förderband zu sichern.

Weiterhin ist es bevorzugt, wenn der Höhenanschlag höhenjustierbar ist, um dadurch den gewünschten Mindestabstand zwischen Fixierband und Förderband verstellen zu können.

Da das Fixierband in seiner Arbeitsstellung einen geringfügigen Formschluss mit dem Teigstück aufweisen soll, muss der Spalt zwischen dem Fixierband und dem darunterliegenden Förderband zumindest geringfügig kleiner sein als die Dicke des Teigstücks. Dies kann bei bestimmten Teigvarianten dazu führen, dass der Teig am Auslauf des Fixierbandes am Fixierband haften bleibt und somit nicht zum Walzenspalt gefördert wird. Um solche Störungen zu vermeiden ist es nach einer bevorzugten Ausführungsform vorgesehen, dass das Fixierband höhenverstellbar gelagert ist und mit einer Antriebseinrichtung senkrecht zur Förderrichtung verstellt werden kann. Dadurch wird es möglich das Fixierband abhängig von der relativen Lage der Teigstücke anzuheben und abzusenken. Befindet sich des Fixierband zunächst in einer angehobenen Position, kann das Teigstück problemlos in den Spalt zwischen dem Fixierband und dem darunterliegenden Förderband eingfördert werden, wobei ein Anhaften des Teigs am Fixierband durch die relativ große Spaltbreite ausgeschlossen wird. Sobald die Vorderkante des Teigstücks in den Walzenspalt eingezogen ist, kann dann das Fixierband abgesenkt werden, um die Fixierung des Teigstücks vor dem Walzenspalt zu gewährleisten. Sobald das Teigstück den Spalt zwischen dem Fixierband und dem darunterliegenden Förderband verlassen hat, kann dann das Fixierband wieder angehoben werden, um das nächste Teigstück einzuziehen.

Eine Ausführungsform der Erfindung ist in den Zeichnungen schematisiert dargestellt und wird nachfolgend erläutert.

Es zeigen:
- **Fig. 1**: eine Vorrichtung zum Langrollen eines Teigstücks gemäß dem vorbekannten Stand der Technik in seitlicher schematisierter Ansicht;
- **Fig. 2**: die Vorrichtung gemäß Fig. 1 in Ansicht von oben;
- **Fig. 3**: eine erfindungsgemäße Vorrichtung zum Langrollen eines Teigstücks in schematisierter seitlicher Ansicht;
- **Fig. 4**: die Vorrichtung gemäß Fig. 3 in Ansicht von oben;
- **Fig. 5**: die Vorrichtung gemäß Fig. 3 im Bereich des Walzenspalts in einer vergrößerten seitlichen Ansicht;
- **Fig. 6**: das Fixierband der Vorrichtung gemäß Fig. 3 mit den darauf angeordneten Prägenoppen in Ansicht von oben;
- **Fig. 7**: das Fixierband gemäß Fig. 6 in vergrößerter Ansicht von oben;
- **Fig. 8**: das Fixierband gemäß Fig. 6 im Querschnitt.

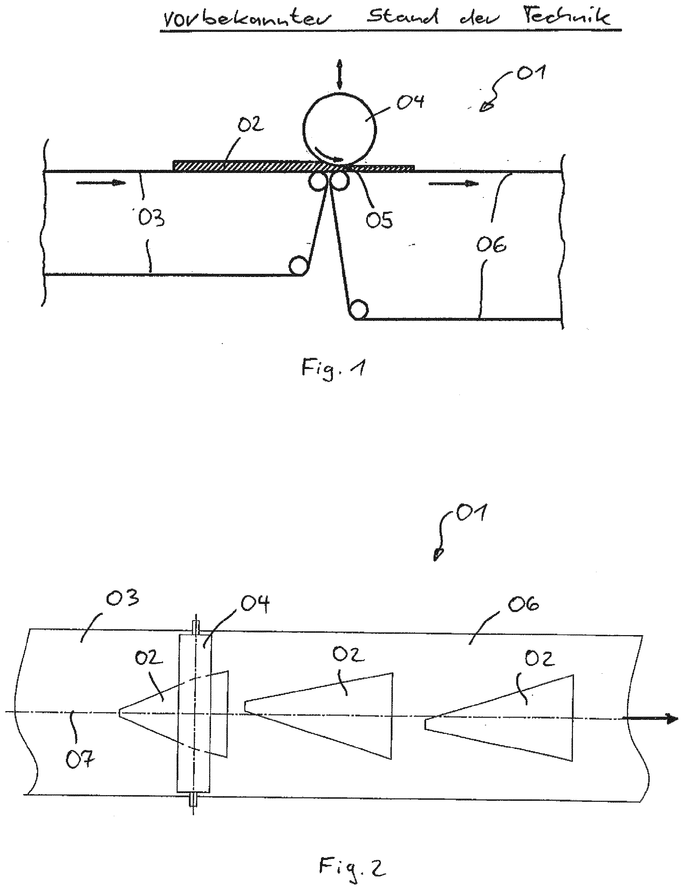

**Fig. 1** zeigt eine Vorrichtung 01 zum Langrollen eines Teigstücks 02, wie sie dem vorbekannten Stand der Technik entspricht. Das Teigstück 02 wird auf Förderbändern 03 und 06 in Förderrichtung gefördert. Das Förderband 06 und eine Langrollwalze 04 bilden einen Walzenspalt 05, durch den das Teigstück 02 ausgewalzt wird, um die Dicke des Teigstücks 02 zu verringern und die Länge des Teigstücks 02 zu vergrößern. Das ausgewalzte Teigstück 02 wird dann anschließend mit dem Förderband 06 weitergefördert.

**Fig. 2** zeigt die Vorrichtung 01 in Ansicht von oben. Dabei sind beispielhaft drei Teigstücke 02 dargestellt, wobei die beiden rechten Teigstücke 02 bereits im Walzenspalt 05 ausgewalzt wurden. Man erkennt, dass durch das Auswalzen der Teigstücke 02 erhebliche Lagefehler gegenüber der gewünschten Soll-Lage symmetrisch zur Mittellinie 07 entstanden sind. Diese Lagefehler sollen durch die erfindungsgemäße Vorrichtung vermieden werden.

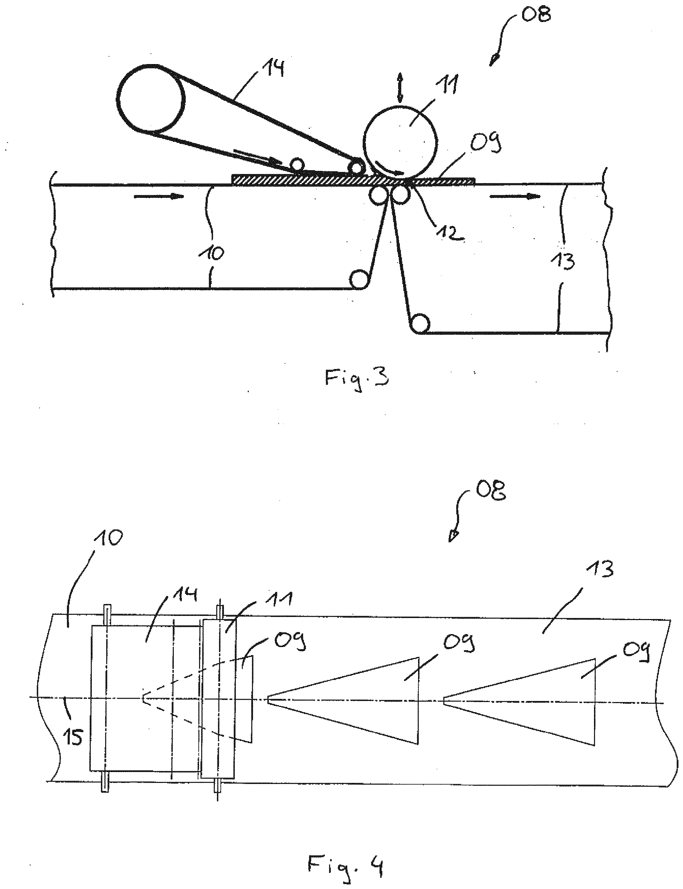

**Fig. 3** zeigt eine erfindungsgemäße Vorrichtung 08 zum Auswalzen von Teigstücken 09. Auch hier werden die Teigstücke 09 mittels eines Förderbands 10 in Richtung einer Langrollwalze 11 gefördert, um die Teigstücke 09 im Walzenspalt 12 zwischen der Langrollwalze 11 und dem Förderband 13 auszuwalzen. Die ausgewalzten Teigstücke 09 werden dann mit einem Förderband 13 weitergefördert.

Um die Entstehung von signifikanten Lagefehlern durch kleinere Lageabweichungen beim Auswalzen der Teigstücke 09 zu vermeiden ist vor der Langrollwalze 11 ein umlaufendes Fixierband 14 vorgesehen, das auf der Oberseite der noch nicht ausgewalzten Teigstücke 09 zur Anlage kommt. Das Fixierband 14 läuft dabei mit gleicher oder kleinerer Umlaufgeschwindigkeit wie das Förderband 10, so dass die Teigstücke 09 ohne wesentlichen Schlupf in Förderrichtung zwischen dem Förderband 10 und dem Fixierband 14 hindurch und weitergefördert werden können.

**Fig. 4** zeigt die Vorrichtung 08 in Ansicht von oben. Man erkennt, dass die Teigstücke 09 trotz anfänglich vorhandener kleinerer Lageabweichungen keine signifikanten Lagefehler gegenüber der Mittellinie 15 aufweisen. Dies wird durch die Fixierung der Teigstücke 09 im noch nicht ausgewalzten Bereich durch die Auflage des Fixierbands 14 erreicht.

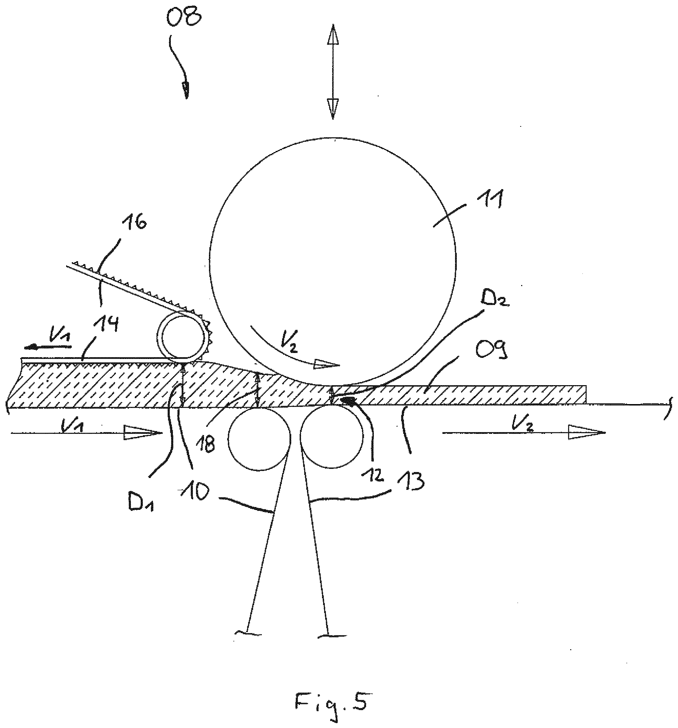

**Fig. 5** zeigt die Vorrichtung 08 im Bereich des Walzenspalts 12 in einer vergrößerten Darstellung. Man erkennt an der Außenseite des Fixierbands 14 Prägevorsprünge 16, die bei Anlage des Fixierbands auf der Oberseite des Teigstücks 09 in die Oberfläche des Teigstücks 09 formschlüssig eingeprägt werden und dadurch eine Fixierung des Teigstücks 09 realisieren. Durch diese Fixierung des Teigstücks 09 im noch nicht ausgewalzten Bereich vor dem Walzenspalt 12 können die beim Auswalzen der Teigstücke 09 auftretenden Schubkräfte, durch die die Teigstücke normalerweise seitlich in unerwünschter Weise versetzt werden können, abgefangen werden. Außerdem wird der noch nicht ausgewalzte Teil des Teigstücks 09 zwischen dem Fixierband 14 und dem Förderband 10 so festgehalten, dass sich das Teigstück 09 nur mit der entsprechenden Fördergeschwindigkeit des Förderbands 10 bzw. des Fixierbands 14 bewegt. Durch diese Fixierung des Teigstücks 09 wird insbesondere auch ein Aufstauen des Teigs vor dem Walzenspalt 12 vermieden.

Durch eine etwas höhere Umlaufgeschwindigkeit der Langrollwalze 11 gegenüber der Fördergeschwindigkeit des Förderbands 10 bzw. des Fixierbands 14 kann aufgrund der Fixierung des noch nicht ausgewalzten Teils des Teigstücks 09 außerdem erreicht werden, dass die Dünne des Teigstücks 09 nicht nur durch das Auswalzen im Walzenspalt 12 realisiert werden muss.

Erfindungsgemäß wird die Dicke des Teigstücks 09 auch dadurch reduziert, dass das Teigstück im Übergangsbereich 18 zwischen dem Ende des Fixierbands 14 einerseits und dem Walzenspalt 12 andererseits durch eine entsprechende Geschwindigkeitsdifferenz in Förderrichtung gestreckt wird und dabei eine entsprechende Verringerung der Dicke erfährt. Das Geschwindigkeitsverhältnis V₂/V₁ wird dazu zumindest geringfügig größer eingestellt als das Dickenverhältnis D1/D2.

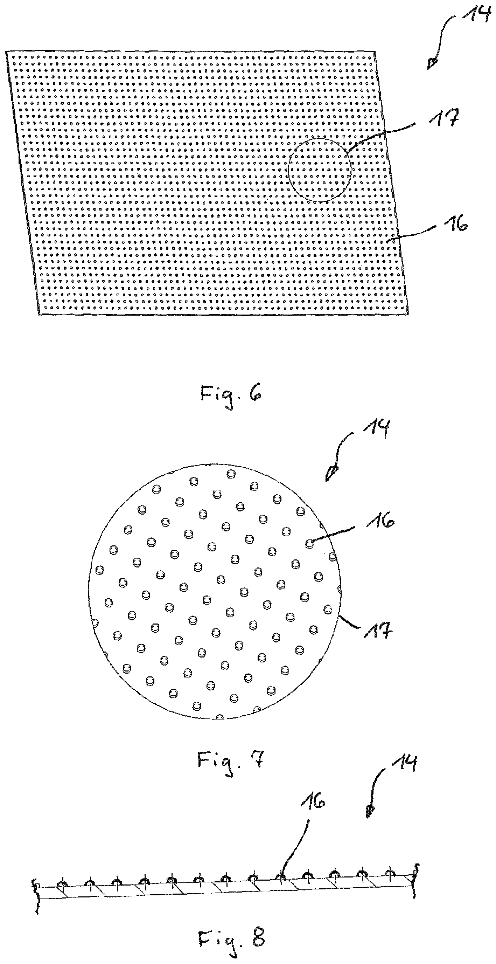

**Fig. 6** zeigt das Fixierband 14 in Ansicht der Funktionsoberfläche, die am Teig zur Anlage kommt. Man erkennt, dass die Prägenoppen 16 in einem gleichförmigen Raster auf der Oberfläche des Fixierbands 14 verteilt sind. Größe und Verteilung der Prägenoppen 16 sind dabei so gewählt, dass trotz der lokalen Verformung des Teigstücks beim Einprägen der Prägenoppen 16 insgesamt keine Dickenänderung des Teigstücks erfolgt.

**Fig. 7** zeigt das Detail 17 der Funktionsoberfläche des Fixierbands 14 in vergrößerter Darstellung. Man erkennt die Prägenoppen 16 in ihrer Anordnung gemäß dem gewählten regelmäßigen Rechteckraster.

**Fig. 8** zeigt das Fixierband 14 mit den Prägenoppen 16 im Querschnitt. Die Prägenoppen 16 weisen eine zylinderabschnittsförmige Prägekontur auf, die mit einer Stirnseite formschlüssig in den Teig der Teigstücke 09 eingeprägt werden kann.

## Patentansprüche

1. Vorrichtung (08) zum Langrollen, Strecken und Dehnen eines Teigstücks (09) mit zumindest einem Förderband (10, 13) auf dem das Teigstück (09) in Förderrichtung gefördert werden kann, und mit einer Langrollwalze (11), die über dem Förderband (10, 13) angeordnet ist, wobei ein Förderband (13) und die Langrollwalze (11) einen Walzspalt (12) bilden, in dem das Teigstück (09) in Förderrichtung ausgewalzt wird, um die Dicke des Teigstücks (09) zu verringern und die Länge des Teigstücks (09) zu vergrößern, und wobei vor der Langrollwalze (11) zumindest ein umlaufendes Fixierband (14) vorgesehen ist, und wobei das Fixierband (14) auf der Oberseite des Teigstücks (09) zur Anlage kommen kann, und wobei auf der Oberfläche des Fixierbands (14) Prägevorsprünge (16) vorgesehen sind, die in die Oberfläche des Teigstücks (14) formschlüssig eingeprägt werden,
**dadurch gekennzeichnet,dass** das Förderband (10), auf dem das Teigstück (09) mit einer Dicke D₁ vor dem Walzenspalt (12) in Förderrichtung gefördert wird, und das Fixierband (14) synchron zueinander mit einer ersten Umlaufgeschwindigkeit (V₁) angetrieben werden, und dass das Förderband (13), auf dem das Teigstück (09) mit einer Dicke D₂ nach dem Walzenspalt in Förderrichtung gefördert wird, und die tangentiale Rotationsgeschwindigkeit der Langrollwalze (11) synchron zueinander mit einer zweiten Umlaufgeschwindigkeit (V₂) angetrieben werden, wobei das Geschwindigkeitsverhältnis V₂/V₁ zumindest geringfügig größer ist, als das Dickenverhältnis D₁/D₂, um das Teigstück im Übergangsbereich (18) zwischen dem Fixierband (14) einerseits und dem Walzenspalt (12) anderseits in Längsrichtung zu strecken bzw. zu dehnen.

2. Vorrichtung nach Anspruch 1,
**dadurch gekennzeichnet,**
**dass** die Prägevorsprünge in der Form von Prägenoppen (16) ausgebildet sind.

3. Vorrichtung nach Anspruch 2,
**dadurch gekennzeichnet,**
**dass** die Prägenoppen eine kugelabschnittsförmige Prägekontur aufweisen.

4. Vorrichtung nach Anspruch 2,
**dadurch gekennzeichnet,**
**dass** die Prägenoppen (16) eine zylinderförmige oder kegelförmige Prägekontur aufweisen.

5. Vorrichtung nach Anspruch 4,
**dadurch gekennzeichnet,**
**dass** die Prägenoppen (16) mit ihrer Stirnseite in die Oberfläche des Teigstücks (09) formschlüssig eingeprägt werden.

6. Vorrichtung nach einem der Ansprüche 1 bis 5,
**dadurch gekennzeichnet,**
**dass** die tangentiale Rotationsgeschwindigkeit der Langrollwalze (11) höher ist als die Umlaufgeschwindigkeit des Fixierbandes (14).

7. Vorrichtung nach einem der Ansprüche 1 bis 6,
**dadurch gekennzeichnet,**
**dass** das Fixierband (14) mit einer vorgegebenen Andruckkraft auf der Oberfläche des Teigstücks aufliegt, wobei die Andruckkraft den Formschluss zwischen Teigstück und Prägenoppen gewährleistet.

8. Vorrichtung nach Anspruch 7,
**dadurch gekennzeichnet,**
**dass** das Fixierband (14) in einem Gestell umlaufend gelagert ist, wobei das Gestell relativ zum Förderband (10, 13) schwenkbar gelagert ist.

9. Vorrichtung nach Anspruch 8,
**dadurch gekennzeichnet,**
**dass** das schwenkbar gelagerte Gestell mit einer von einem Federelement aufgebrachten Federkraft gegen die Oberfläche des Teigstücks gedrückt wird.

10. Vorrichtung nach Anspruch 8,
**dadurch gekennzeichnet,**
**dass** das schwenkbar gelagerte Gestell mit einer vorgegebenen Gewichtskraft auf der Oberfläche des Teigstücks aufliegt.

11. Vorrichtung nach Anspruch 10,
**dadurch gekennzeichnet,**
**dass** zur Änderung der Gewichtskraft am Gestell Zusatzgewichte anbringbar sind.

12. Vorrichtung nach einem der Ansprüche 8 bis 11,
**dadurch gekennzeichnet,**
**dass** das Gestell an einem Höhenanschlag zur Anlage kommen kann, um einen Mindestabstand zwischen Fixierband (14) und Förderband (10, 13) zu sichern.

13. Vorrichtung nach Anspruch 12,
**dadurch gekennzeichnet,**
**dass** der Höhenanschlag höhenjustierbar ist, um den Mindestabstand zwischen Fixierband (14) und Förderband (10, 13) zu verstellen.

14. Vorrichtung nach einem der Ansprüche 1 bis 11,
**dadurch gekennzeichnet,**
**dass** das Fixierband höhenverstellbar gelagert ist und mit einer Antriebseinrichtung senkrecht zur Förderrichtung verstellt werden kann.

## Claims

1. A device (08) for stretch rolling, stretching and extending a dough piece (09), having at least one conveyor belt (10, 13) on which the dough piece (09) can be conveyed in the conveying direction, and having a stretch rolling roller (11) which is disposed over the conveyor belt (10, 13), wherein a conveyor belt (13) and the stretch rolling roller (11) form a roll nip (12) in which the dough piece (09) is rolled out in the conveying direction in order to reduce the thickness of the dough piece (09) and to increase the length of the dough piece (09), and wherein at least one revolving locating belt (14) is provided in front of the stretch rolling roller (11), and wherein the locating belt (14) can come into contact with the top of the dough piece (09), and wherein on the surface of the locating belt (14), impressing protrusions (16) are provided which are mechanically keyed into the surface of the dough piece (14),
**characterized in that** the conveyor belt (10) on which the dough piece (09) with a thickness D₁ in front of the roll nip (12) is conveyed in the conveying direction, and the locating belt (14) are driven synchronously with respect to each other at a first speed of revolution (V₁), and **in that** the conveyor belt (13) after the roll gap on which the dough piece (09) with a thickness D₂ is conveyed in the conveying direction and the tangential speed of rotation of the stretch rolling roller (11) are driven synchronously with respect to each other at a second speed of revolution (V₂), wherein the ratio of speeds, V₂/V₁ is at least slightly larger than the ratio of the thicknesses, D₁/D₂, in order to stretch or extend the dough piece in the longitudinal direction in the transition region (18) between the locating belt (14) on the one hand and the roll gap (12) on the other hand.

2. The device as claimed in claim 1,
**characterized in that**
the impressing protrusions are configured in the shape of impressing studs (16).

3. The device as claimed in claim 2,
**characterized in that**
the impressing studs have an impressing contour in the shape of a section of a sphere.

4. The device as claimed in claim 2,
**characterized in that**
the impressing studs (16) have a cylindrically shaped or conically shaped impressing contour.

5. The device as claimed in claim 4,
**characterized in that**
the fronts of the impressing studs (16) are mechanically keyed into the surface of the dough piece (09).

6. The device as claimed in one of claims 1 to 5,
**characterized in that**
the tangential speed of rotation of the stretch rolling roller (11) is higher than the speed of revolution of the locating belt (14).

7. The device as claimed in one of claims 1 to 6,
**characterized in that**
the locating belt (14) is applied to the surface of the dough piece with a predetermined pressure, wherein the pressure guarantees the mechanical keying between the dough piece and the impressing studs.

8. The device as claimed in claim 7,
**characterized in that**
the locating belt (14) is mounted for revolution in a frame, wherein the frame is pivotably mounted with respect to the conveyor belt (10, 13).

9. Canal The device as claimed in claim 8,
**characterized in that**
the pivotably mounted frame is pressed against the surface of the dough piece with a spring force which is applied by a spring element.

10. The device as claimed in claim 8,
**characterized in that**
the pivotably mounted frame is applied to the surface of the dough piece with a predetermined weight.

11. The device as claimed in claim 10,
**characterized in that**
additional weights can be applied in order to vary the weight on the frame.

12. The device as claimed in one of claims 8 to 11,
**characterized in that**
the frame can come into abutment with a height stop in order to ensure a minimum distance between the locating belt (14) and the conveyor belt (10, 13).

13. The device as claimed in claim 12,
**characterized in that**
the height of the height stop can be adjusted in order to alter the minimum distance between the locating belt (14) and the conveyor belt (10, 13).

14. The device as claimed in one of claims 1 to 11,
**characterized in that**
the locating belt is mounted so as to be height adjustable and can be adjusted perpendicular to the conveying direction with a drive means.

## Revendications

1. Dispositif (08) permettant l'allongement, l'étirage et l'extension d'un morceau de pâte (09) avec au moins une bande transporteuse (10, 13) sur laquelle le morceau de pâte (09) peut être transporté dans le sens de transport, et avec un rouleau d'allongement (11) agencé au-dessus de la bande transporteuse (10, 13), dans lequel une bande transporteuse (13) et le rouleau d'allongement (11) forment une emprise (12) au sein de laquelle le morceau de pâte (09) est laminé dans le sens de transport afin de réduire l'épaisseur du morceau de pâte (09) et d'augmenter la longueur du morceau de pâte (09), et dans lequel au moins une bande fixatrice (14) circulante est prévue devant le rouleau d'allongement (11), et dans lequel la bande fixatrice (14) peut venir reposer sur le côté supérieur du morceau de pâte (09), et dans lequel des saillies d'empreinte (16), qui sont empreintes par complémentarité de forme dans la surface du morceau de pâte (14), sont prévues sur la surface de la bande fixatrice (14),
**caractérisé en ce que** la bande transporteuse (10), sur laquelle le morceau de pâte (09) présentant une épaisseur D₁ avant l'emprise (12) est transporté dans le sens de transport, et la bande fixatrice (14) sont entraînées de manière synchrone l'une par rapport à l'autre à une première vitesse de circulation (V₁), et **en ce que** la bande transporteuse (13), sur laquelle le morceau de pâte (09) présentant une épaisseur D₂ après l'emprise est transporté dans le sens de transport, et la vitesse de rotation tangentielle du rouleau d'allongement (11) sont entraînées de manière synchrone l'une par rapport à l'autre à une seconde vitesse de circulation (V₂), dans lequel le rapport de vitesse V₂/V₁ est au moins légèrement supérieur au rapport d'épaisseur D₁/D₂ afin d'étirer ou d'étendre le morceau de pâte dans le sens longitudinal dans la région de transition (18) entre la bande fixatrice (14) d'une part et l'emprise (12) d'autre part.

2. Dispositif selon la revendication 1,
**caractérisé en ce que**,
les saillies d'empreinte sont réalisées sous forme de boutons d'empreinte (16).

3. Dispositif selon la revendication 2,
**caractérisé en ce que**,
les boutons d'empreinte présentent un contour d'empreinte en forme de section de sphère.

4. Dispositif selon la revendication 2,
**caractérisé en ce que**,
les boutons d'empreinte (16) présentent un contour d'empreinte de forme cylindrique ou conique.

5. Dispositif selon la revendication 4,
**caractérisé en ce que**,
les faces avant des boutons d'empreinte (16) sont empreintes par complémentarité de forme dans la surface du morceau de pâte (09).

6. Dispositif selon l'une quelconque des revendications 1 à 5,
**caractérisé en ce que**,
la vitesse de rotation tangentielle du rouleau d'allongement (11) est supérieure à la vitesse de circulation de la bande fixatrice (14).

7. Dispositif selon l'une quelconque des revendications 1 à 6,
**caractérisé en ce que**,
la bande fixatrice (14) repose avec une force de pression prédéfinie sur la surface du morceau de pâte, dans lequel la force de pression garantit la complémentarité de forme entre le morceau de pâte et les boutons d'empreinte.

8. Dispositif selon la revendication 7,
**caractérisé en ce que**,
la bande fixatrice (14) est montée de manière circulante dans un châssis, dans lequel le châssis est monté pivotant par rapport à la bande transporteuse (10, 13).

9. Dispositif selon la revendication 8,
**caractérisé en ce que**,
le châssis monté pivotant est pressé contre la surface du morceau de pâte avec une force de ressort fournie par un élément formant ressort.

10. Dispositif selon la revendication 8,
**caractérisé en ce que**,
le châssis monté pivotant repose sur la surface du morceau de pâte avec une force pondérale prédéfinie.

11. Dispositif selon la revendication 10,
**caractérisé en ce que**,
des poids supplémentaires peuvent être fournis au niveau du châssis afin de modifier la force pondérale.

12. Dispositif selon l'une quelconque des revendications 8 à 11,
**caractérisé en ce que**,
le châssis peut venir reposer au niveau d'une butée de hauteur afin d'assurer une distance minimale entre la bande fixatrice (14) et la bande transporteuse (10, 13).

13. Dispositif selon la revendication 12,
**caractérisé en ce que**,
la butée de hauteur est réglable en hauteur afin d'ajuster la distance minimale entre la bande fixatrice (14) et la bande transporteuse (10, 13).

14. Dispositif selon l'une quelconque des revendications 1 à 11,
**caractérisé en ce que**,
la bande fixatrice est montée de manière à pouvoir être ajustée en hauteur et peut être ajustée perpendiculairement au sens de transport avec un dispositif d'entraînement.
